(19) Europäisches Patentamt
European Patent Office
Office européen des brevets

(11) EP 0 265 053 B1

(12) EUROPEAN PATENT SPECIFICATION

(45) Date of publication and mention of the grant of the patent:
**23.10.1996 Bulletin 1996/43**

(51) Int Cl.[6]: **C08F 10/00**, C08F 4/06

(21) Application number: **87307508.9**

(22) Date of filing: **25.08.1987**

(54) **Living polymerization of olefins to end-functionalized polymers**

Lebende Polymerisation von Olefinen zu endfunktionsfähigen Polymeren

Polymérisation vivante d'oléfines à polymères fonctionnalisés terminalement

(84) Designated Contracting States:
**AT BE CH DE FR GB IT LI LU NL SE**

(30) Priority: **25.08.1986 US 899655**

(43) Date of publication of application:
**27.04.1988 Bulletin 1988/17**

(73) Proprietors:
- **Kennedy, Joseph Paul**
  **Akron Ohio 44304 (US)**
- **Mishra, Munmaya Kumar**
  **Akron Ohio 44304 (US)**

(72) Inventors:
- **Kennedy, Joseph Paul**
  **Akron Ohio 44304 (US)**
- **Mishra, Munmaya Kumar**
  **Akron Ohio 44304 (US)**

(74) Representative: **Nash, Keith Wilfrid et al**
**KEITH W. NASH & Co.**
**Pearl Assurance House**
**90-92 Regent Street**
**Cambridge CB2 1DP (GB)**

(56) References cited:
**DE-A- 2 633 710**
**US-A- 2 559 062**
**US-A- 3 963 772**
**US-A- 4 189 547**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 265 053 B1

## Description

### TECHNICAL FIELD

This invention relates to a novel class of living polymerization systems useful to produce novel polymers having well-defined head groups and end groups. More in particular, this invention concerns complexes that are able to incorporate one or many olefinic monomers and thus grow into polyolefins having low molecular weights in the range of 200 to 500, medium molecular weights in the range of 2,000 to 10,000, or high molecular weights in the range of 100,000 or higher. Specifically, this invention discloses a living polymerization method that gives rise to polymers carrying well-defined useful and versatile head groups and tail groups.

### BACKGROUND ART

Truly living polymerizations, i.e., truly termination-less and chain transfer-less polymerizations, are a most desirable objective of the synthetic polymer chemist. If the rates of both termination and chain transfer are zero, $R_t = R_{tr} = 0$, and the rate of initiation is larger than that of propagation $R_i >> R_p$, polymer molecule weights are determined by the ration [M]/[I] (i.e., monomer over initiator concentrations) and $\overline{M}w/\overline{M}n \simeq 1.0$. Living polymerizations are not only of scientific interest, but also of great commercial consequence, and several industrial processes are based on living systems, e. g., cis-1,4-polybutadiene, triblock copolymers of styrene-butadiene/styrene, polytetrahydrofuran, but these are not carbocationic polymerization processes.

US 2,559,062 (Dornte) discloses the specific catalytic effects of Friedel-Crafts etherate complexes and their ability to modify the ratio of copolymerisation between isobutylene and a multi-olefin. Specifically, the molecular weight of the resulting polymer can be increased, with a corresponding effect on the physical properties of the polymer (see column 1, lines 31-38).

Through the equilibria involving the ether, the diolefin and the Friedel-Craft etherate complex, the diolefin is stabilised thereby permitting a degree of control over the polymerisation reaction and over the characteristics of the polymer produced (column 2, lines 34-37). According to the teaching of US 2,559,062, it is an essential limitation that the etherate complexes used as catalysts have a molecular weight greater than 90-100. Simple methyl or ethyl ether complexes are considered inoperative (column 3, lines 23-31).

US 2,559,062 makes no discussion of how these etherate complexes interact with the polymerisation reaction, other than to act in a catalytic fashion. Moreover, there is no discussion regarding the ability to control not only the molecular weight but also the molecular weight distribution through the elimination of undesirable chain transfer terminations between the growing polymer complex and the reactant monomer. US 2,559,062 does not teach "living" polymerisation, nor the ability to control the polymer composition, whether that control is exercised at the head group of the polymer chain or at a focal point from which the growing chains emanate when di- or tri-etherate complexes are used.

### DISCLOSURE OF INVENTION

Recently, we have developed a series of new initiator systems that lead us to true living polymerization systems for olefins such as isobutylene, copolymerization systems of an olefin such as isobutylene with a diolefin such as isoprene, and to new telechelic and reactive polymers of isobutylene or related olefins.

This invention concerns a new family of initiating systems, a new process for making polymers and a series of new products having specific end groups thereon.

The family of initiating systems is based on organic ethers in conjunction with a Lewis acid, preferably $BCl_3$, as illustrated by the following formulae:

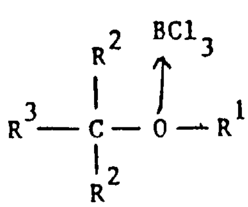
;
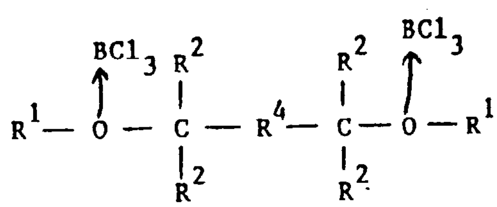
;

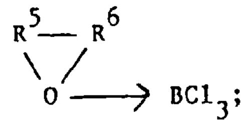

and

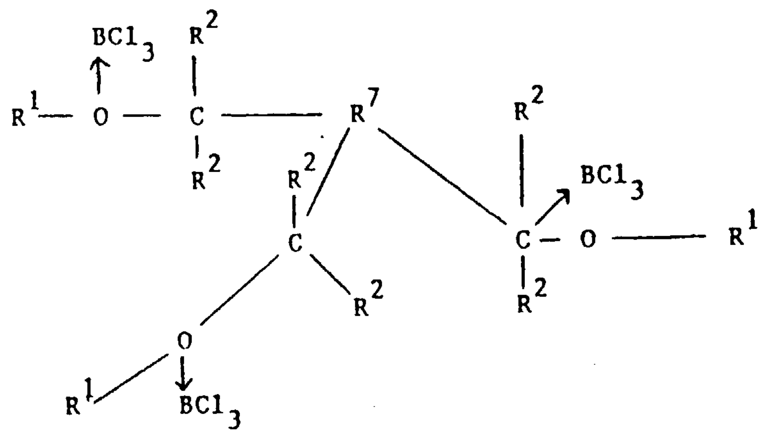

where $R^1$ in the above formula is an organic moiety such as methyl, and related alkyl or aralkyl groups, containing 1 to 24 carbon atoms, alkenyl groups such as $-CH=CH_2$ and related lower alkenyl groups, containing 2 to 8 carbon atoms, and groups containing hetero atoms and related groups such as alkylene chloride, containing up to 20 carbon atoms;

$R^2$ may be methyl and related alkyl groups containing from 1 to 20 carbon atoms, in general $R^2$ can be the same as $R^1$;
$R^3$ is methyl, or related alkyls containing from 2 to 20 carbon atoms or aryls such as phenyl, cycloalkyls, or vinyl or allyl groups, in general $R^3$ can be the same as $R^2$;
$R^4$ is methylenic, acetylenic such as $-C{\equiv}C-$, or arylenic such as

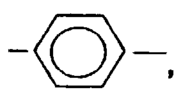

or ethylenic such as $-CH=CH-$ where the repeating units contain from 1 to 20 and preferably 1 to 10 carbon atoms;
$R^5$ is an alkylene selected from the group consisting of

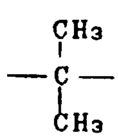

and $\{CH_2\}_x$ where x is an integer from 1 to 6 and wherein the alkylene may be substituted;
$R^6$ is selected from the same group as $R^5$; and
$R^7$ is a three valent organic moiety such as

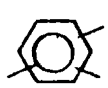 or 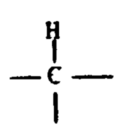 .

BEST MODE FOR CARRYING OUT THE INVENTION

The polymerization can be carried out at an appropriate temperature by contacting preferably in a liquid diluent the olefinic monomer, the organic ether and $BCl_3$ or related Lewis acid. The diluents preferably are hydrocarbons such as n-butane, n-pentane, n-hexane, isopentane, neopentane, benzene, toluene, methylcyclohexane or chlorinated hydrocarbons such as $CH_2Cl_2$, $CH_3Cl$, $C_2H_5Cl$, chlorobenzene, ethylidene dichloride, propyl chloride, to name a few of the representative ones well known to the art. Mixed solvents can be used.

As to the mixing sequence of the ingredients, they may be done without regard to sequence. For example, one can premix the organic ether and $BCl_3$ in a solvent and then add the monomer in a solvent, or premix the ether and the monomer in a solvent and then add the $BCl_3$ in a solvent. Generally, the polymerization starts upon the introduction of the last needed ingredient when the temperature is maintained below the decomposition temperature of the complex which generally is below minus 10°C but in some cases may be above 40°C. Bulk polymerization, i.e., in the absence of a solvent, can also be carried out.

The polymerization, generally, can be carried out continuously by mixing two streams of chemicals, ether and $BCl_3$ preferably mixed with monomer in appropriate solvents, or ether and monomer mixed with $BCl_3$ or related Lewis acid at a temperature below the decomposition temperature of the complex formed.

In a special embodiment, we also have discovered that the polymerization can be carried out above the decomposition temperature of the complex provided certain precautions are taken, to give savings in refrigeration costs and thus achieve economy in production. These precautions in one embodiment call for the complex of an organic ether with a Lewis acid to be formed below the decomposition temperature of the complex and be maintained below such temperature until their use to initiate the polymerization.

In another embodiment, the premade complex made below its decomposition temperature simultaneously is charged and mixed with the monomer to give a mixture above the decomposition temperature of the complex, and the mixing is controlled to give a temperature where the rate of decomposition of the complex is sufficiently so low that the undecomposed complex effects sufficient polymerization of the monomer to give the desired polymer of the desired molecular weight. It being understood that when sufficient of the complex has decomposed, the reaction stops. Thus, we have discovered that polymerization under these special embodiment conditions can be practiced because the rates of polymerizations are relatively fast, usually being complete in a matter of one to three minutes and in nearly all cases, in a matter of 30 minutes while the rate of decomposition is such to give a half life of 5 minutes to an hour at a temperature of 20°C to 30°C. Therefore, not only homopolymers but copolymers and block polymers can be made above the decomposition temperature of the complex when these precautions are taken.

The polymerization most likely occurs by the opening of the ether bond and monomer insertion, as illustrated by the following schematic and illustrative equation:

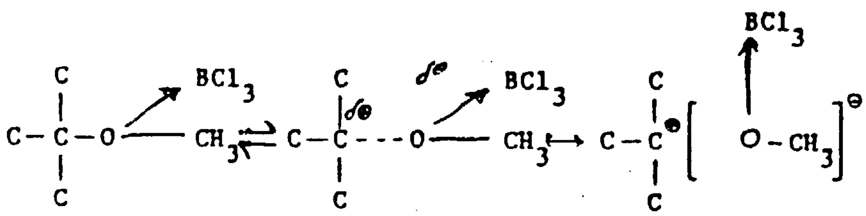

Using the last formula in the above equation, we will exemplify the monomer insertion in the following schematic equation:

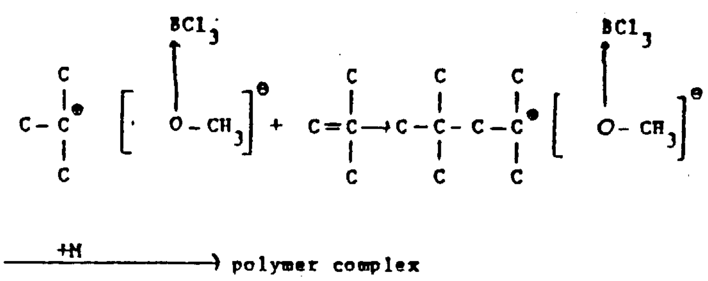


The complex counter anion does not assist or cause proton elimination from the carbocation. This is a very important

characteristic that distinguishes our counter anions from other known nonnucleophilic counter anions, e.g., $BCl_4$, $BF_4$, and $AlCl_4$. In conventional polymerizations taking place in the presence of simple nonnucleophilic counter anions, the latter assists or causes proton elimination from the growing carbocationic center and thus a species arises that proceeds to protonate monomer. For example, with $BF_4$ counter anion:

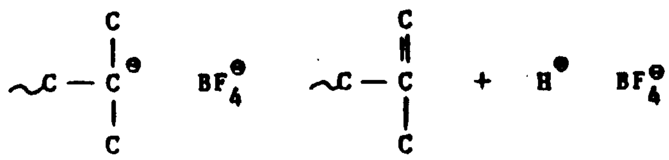

the latter protonates incoming monomer as follows:

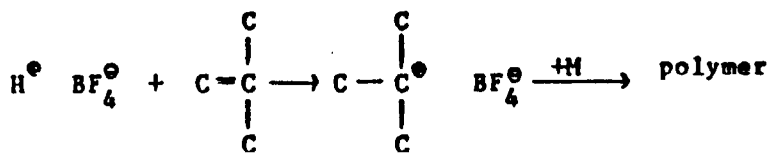

This sequence of events constitutes chain transfer to monomer and it is a most undesirable process for polymer chemists. First of all, this process reduces the molecular weight of the polymer that is formed, and secondly it yields polymers carrying an undesirable unreactive head group:

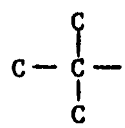

Molecular weight control in systems that involve chain transfer to monomer is more difficult to achieve than in systems devoid of this process. Thus, an advantage of our invention is it avoids the above two shortcomings.

The complex anion of our invention is super-nonnucleophilic and as such does not assist or cause deprotonation of the growing carbocationic center. Thus, chain transfer to monomer will not occur in our systems, and consequently molecular weight control can be accomplished by adjusting the relative concentrations of monomer and initiating system, i.e., molecular weight is a function of $[M]_o/[I]_o$, where the subscripts indicate initial concentrations. The polymer will grow as long as monomer is available and the monomer is not prevented from reacting with the growing center, for example, by the growing center being coagulated from the system or decomposition of sufficient $[I]_o$ to stop the polymerization.

Also on account of the supernonnucleophilic nature of our counter anions, the polymerization is devoid of termination, i.e., the polymerization is terminationless until the temperature exceeds the decomposition temperature of the complex for sufficient time to reduce the $[I]_o$ to zero. The growing center is kept "alive" for extended periods of time without losing its propagating ability. In contrast, in conventional polymerizations termination occurs most likely by a reaction between the growing cation and associated counter anion, for example as set forth hereinafter:

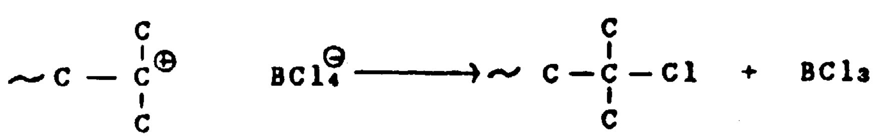

While uninterrupted growth can be maintained for extended periods of time with systems containing supernonnucleophilic counter anions, if termination is desired, say for the preparation of low molecular weight end-functionalyzed polymer, such a premature termination reaction can be brought about by either increasing the temperature of the polymerization system and thus decomposing the active growing complex, or by adding a strong nucleophilic terminating agent, such as methanol or ethanol, pyridine, ammonia, an alkyl amine, or water. Thus, our invention provides a mechanism of varying the molecular weight from several hundreds to the millions. These reactions may result in a Cl-terminated polymer (or a halogen-terminated polymer) most likely because of the following termination reaction:

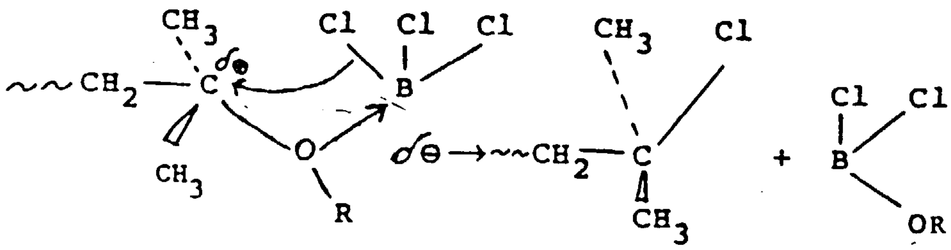

The concurrently formed $BCl_2OR$ is converted to other products. The tert.-chloride end group is a valuable end function and can be used in a variety of well known applications.

Any of the well known olefin-based monomers may be used in this invention to produce polymers. The alpha-olefins having usually from 2 to 20 and preferably 4 to 8 carbon atoms may be used alone or in conjunction with themselves with a diolefin, either conjugated or nonconjugated, to produce polymers or copolymers of varying molecular weight even as low as 300 to in excess of a million. These polymers can be low molecular weight liquid or viscous polymers of 200 or 500 to 10,000 molecular weight units or the solid waxy to plastic or elastomeric materials of greater than 100,000 to 500,000 to a million or more molecular weight units. Examples of these olefins are those having 2 to 20 or more carbon atoms and are readily available as specific species such as propylene, butylene, amylenes, hexylenes, heptylenes, octylenes, the styrenes, alpha-methyl styrenes, or the dienes either nonconjugated or conjugated such as butadiene, isoprene, piperylene, hexadienes and the octadienes, and the cyclic analogues of these such as 1,3-cyclohexadiene, to name a few of the well known and representative members.

The Lewis acids useful in this invention are $BCl_3$, $AlCl_3$, $TiCl_4$, $SbF_5$, $FeCl_3$, $VCl_4$ and $ZnCl_2$. Although $BCl_3$ and $TiCl_4$ are the preferred species, the other halogens and the Lewis acids also can be used by replacing one member for another one. Any of the organic ethers may be used provided they form a stable complex with the Lewis acids at a suitable polymerization temperature usually minus 40°C up to 10° to 20°C, or if the rate of decomposition of the complex at higher temperature is lower than the rate of polymerization. Also, the organic ethers can contain usually from 1 to 20 carbon atoms, with those less than 15 carbon atoms being preferred. The mono-, di- and trifunctional ethers offer a means of making polymers having certain specific mono-, di- or tri- end group functions such as chloride.

The nature of this invention and its many aspects and advantages may be more readily understood and appreciated by reference to the following representative and illustrative examples.

The general polymerization process used in Examples 1 to 11 was as follows:

A series of test tube runs were made by charging each test tube with solvent, monomer, viz., isobutylene, sometimes abbreviated as IB herein, and an ether initiator. The polymerization was started by the addition of $BCl_3$ with or without solvent being present with the temperature being as given. The concentrations and results of these runs are given in Tables 1 through 12, according to the experimental run listed. The polymerization was, in most cases, very rapid, i.e., the conversions reached their final values within a few minutes. Nevertheless, to be sure that the reactions did proceed to completion, the polymerization time was extended to 30 minutes. After this time, the reactions were quenched by the addition of 5.0 ml of prechilled methanol. The polymer was recovered by a conventional workup, i. e., evaporation of volatiles, dissolution in n-hexane, decantation or filtration of inorganic residues such as boron compounds or the other Lewis acid residues, removal of hexane by evaporation at room temperature, etc. The fact that the products were not washed insured complete product recovery; i.e., no loss of low molecular weight components. The polymer products were characterized by a variety of techniques including IR, $^1H$ NMR spectroscopy, osmometry and GPC with infrared and ultraviolet detectors.

<u>Example 1</u>

A series of experiments were made using methyl tert.-butyl ether (tBuOMe). The results of the individual experiments, a total of 3 runs are shown in Table 1, together with the conditions (i.e., concentration of chemicals) used. In these runs a reactor (60 ml tube) was charged at minus 30°C under a blanket of $N_2$ with solvent, tBuOMe and isobutylene and at zero time $BCl_3$ was added. The charge was agitated and after 30 minutes at minus 30°C prechilled MeOH was added to quench the reaction. Work-up was conventional, i.e., the polymer was washed with MeOH, dissolved in n-hexane, filtered and dried. Molecular characterization was effected by GPC.

## TABLE 1

Monomer: Isobutylene $[M]_o$ = 1.4 mole/ℓ

Coinitiator: tBuOMe $[I]_o$ = $5.4 \times 10^{-2}$ mole/ℓ

Initiator: $BCl_3$ $[BCl_3]_o$ = $1.36 \times 10^{-2}$ mole/ℓ

Solvent: $CH_3Cl$ or $CH_2Cl_2$ (initial charge: 20ml)

Time: 30 minutes

Temperature: minus 30°C

Killing with MeOH (~ 5 ml, precooled)

| | RUN | | |
|---|---|---|---|
| | 1a | 1b | 1c |
| Solvent | $CH_3Cl$ | $CH_3Cl$ | $CH_2Cl_2$ |
| $[BCl_3]_o$ | $13.6 \times 10^{-3}$ | $13.6 \times 10^{-3}$ | $13.6 \times 10^{-2}$ |
| Conv. % | 18.5 | 40 | 100 |
| $\bar{M}_n$ | 4300 | - | - |
| $\bar{M}_w$ | - | - | - |
| $\bar{M}_w/\bar{M}_n$ | Bimodal | - | - |

Example 2

A series of experiments were made using 2,4,4-trimethyl-2-methoxy pentane (TMPOMe) initiator. The reactor was charged with solvent, initiator and monomer at minus 30°C and then $BCl_3$, was added to effect polymerization. Otherwise the polymerization conditions and characterization methods were the same as those outlined in Example 1. Table 2 shows the reagent concentrations used and results obtained. According to these data TMPOMe is an efficient initiator. Based on a variety of analytical techniques (i.e., $^1H$ NMR spectra), the polymers contain the TMP head group and the tert.-chloro end group as shown by the following formula:

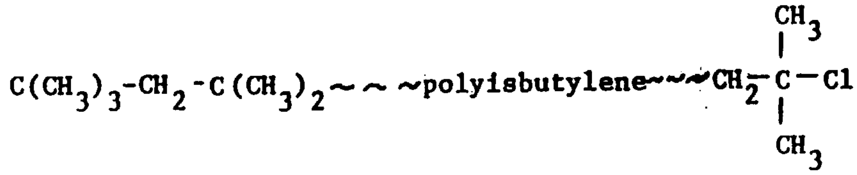

Instead of isobutylene, other olefin monomers may be used to produce the corresponding end group terminated polyolefins, for instance, polyamylene or polyheptylene or the other well known olefin monomers.

In the tables, MeOH is methanol.

## TABLE 2

| | | |
|---|---|---|
| Monomer: | Isobutylene | $[M]_o$ = 1.7 mole/ℓ |
| Initiator: | TMPOMe | $[I]_o$ = as indicated |
| Coinitiator: | $BCl_3$ | $[BCl_3]_o$ = $3.7 \times 10^{-1}$ mole/ℓ |
| Solvent: | $CH_2Cl_2$ | (initial charge: 20 ml) |
| Time: | | 30 minutes |
| Temperature: | | minus 30°C |

Killing with MeOH (~ 5 ml, precooled)

| | RUN | | |
|---|---|---|---|
| | 2a | 2b | 2c |
| $[I]_o$ | $7.6 \times 10^{-2}$ | $2.3 \times 10^{-2}$ | $7.4 \times 10^{-3}$ |
| Conv. % | 100 | 100 | 100 |
| $\overline{M}_n$ | 3,900 | 7,700 | 16,900 |
| $\overline{M}_w$ | 6,600 | 15,400 | 37,200 |
| $\overline{M}_w/\overline{M}_n$ | 1.7 | 2.0 | 2.2 |

Example 3

The experimental conditions of Examples 1 and 2 were used in this example except the initiator was 2-phenyl-2-methoxy propane (cumyl methyl ether, CuOMe) and the temperature was varied from minus 30°C to minus 10°C. The data are shown in Table 3. Spectrographic analysis of the polymers indicated that the polymer contained a phenyl head group and tert.-chloro end group with the following structure:

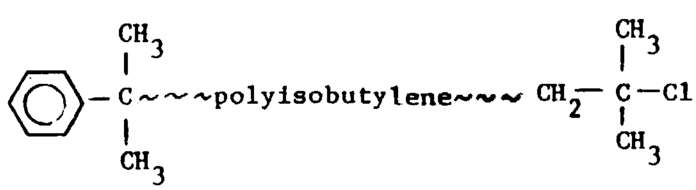

Evidently CuOMe is an excellent living polymerization initiator and the molecular weights can be controlled at will by the following equation: $\overline{M}_n = [\overline{M}]_o/[I]_o$.

TABLE 3

Monomer: Isobutylene $[M]_o$ = 1.17 mole/ℓ

Initiator: CuOMe $[I]_o$ = as indicated

Coinitiator: $BCl_3$ $[BCl_3]_o$ = $3.7x10^{-1}$ mole/ℓ

Solvents: $CH_3Cl$ and $CH_2Cl_2$ (initial charge: 20 ml)

Time: 30 minutes unless otherwise indicated

Killing with MeOH (~5 ml, precooled)

| | RUN | | |
|---|---|---|---|
| | 3a | 3b | 3c |
| Solvent | $CH_2Cl_2$ | $CH_2Cl_2$ | $CH_2Cl_2$ |
| $[I]_o$ | $7.7x10^{-2}$ | $2.3x10^{-2}$ | $7.4x10^{-3}$ |
| Temp. °C | -30 | -30 | -30 |
| Conv. % | 100 | 100 | 100* |
| $\overline{M}_n$ | 1500 | 4650 | 13700 |
| $\overline{M}_w$ | 5000 | 14000 | 30000 |
| $\overline{M}_w/\overline{M}_n$ | 3.3 | 3.0 | 2.2 |

| | RUN | | |
|---|---|---|---|
| | 3d | 3e | 3f |
| Solvent | $CH_3Cl$ | $CH_3Cl$ | $CH_3Cl$ |
| $[I]_o$ | $7.7x10^{-2}$ | $2.3x10^{-2}$ | $7.4x10^{-3}$ |
| Temp. °C | -30 | -30 | -30 |
| Conv. % | 100 | 100 | 100* |
| $\overline{M}_n$ | 960 | 3600 | 14700 |
| $\overline{M}_w$ | 2900 | 8600 | 29000 |
| $\overline{M}_w/\overline{M}_n$ | 3.0 | 2.3 | 1.9 |

* conversions were ~100% after 1 minute

TABLE 3 (continued)

| | RUN | |
|---|---|---|
| | 3g | 3h |
| Solvent | $CH_2Cl_2$ | $CH_2Cl_2$ |
| $[I]_o$ | $2.3x10^{-2}$ | $7.4x10^{-3}$ |
| Temp. °C | -10 | -10 |
| Conv. % | 100 | 100* |
| $\overline{M}_n$ | 5000 | 12000 |
| $\overline{M}_w$ | 15000 | 36000 |
| $\overline{M}_w/\overline{M}_n$ | 3.0 | 3.0 |

*conversions were ~ 100% after 1 minute

Example 4

In this series of experiments carried out at minus 10°C under conditions essentially the same to those used in Experiments 1-3, the monomer concentrations were varied. The initiator was CuOMe. The conditions (concentrations) and results are summarized in Table 4. It is of interest that a plot of 1/ $\overline{DP}_n$ (reciprocal number average degrees of polymerization) versus $1/[M]_o$ (reciprocal monomer concentration) gives a straight line starting at the origin. The fact that this so called "Mayo plot" shows no intercept indicates the absence of chain transfer to monomer, i.e., the presence of living polymerizations.

TABLE 4

| | | |
|---|---|---|
| Monomer: | Isobutylene | $[M]_o$ = as stated, mole/ℓ |
| Initiator: | CuOMe | $[I]_o$ = $5.76 \times 10^{-3}$ mole/ℓ |
| Coinitiator: | $BCl_3$ | $[BCl_3]$ = $1.55 \times 10^{-1}$ mole/ℓ |
| Solvent: | $CH_2Cl_2$ | (initial charge: 20 ml) |
| Time: | 30 minutes | |
| Temperature: | minus 10°C | |

Killing with MeOH (~ 5ml, precooled)

| | RUN | | | | |
|---|---|---|---|---|---|
| | 4a | 4b | 4c | 4d | 4e |
| $[M]_o$ | 0.282 | 0.564 | 0.864 | 1.228 | 1.58 |
| Conv. % | 100 | 100 | 100 | 100 | 100 |
| $\bar{M}_n$ | 3080 | 7100 | 11900 | 13300 | 14900 |
| $\bar{M}_w$ | 7600 | 17900 | 24850 | 28400 | 32900 |
| $I_{eff}$% | 94 | 79 | 70 | 84 | 93 |
| $\bar{M}_w\bar{M}_n$ | 2.4 | 2.5 | 2.0 | 2.1 | 2.2 |

Example 5

In this experimental series a difunctional initiator 1,4-bis(2-methoxy propane)benzene (also called dicumyl methoxy, DiCuOMe) has been used at minus 30° and minus 10°C under the general conditions used in Examples 1-4. Due to the difunctional nature of this initiator a difunctional telechelic polymer with the following structure has been obtained:

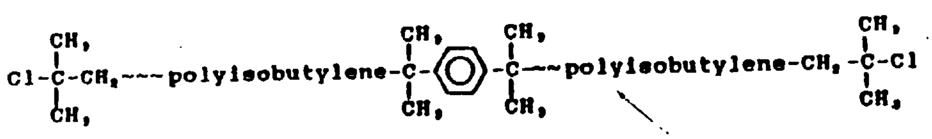

The number of isobutylene units incorporated into the polymer is determined by the $[M]_o/[I]_o$ ratio. Table 5 shows the experimental conditions and summarizes the results.

By using different olefin monomers, difunctional telechelic polymers may be made, for example, a block polymer of isoprene-isobutylene or butadiene-octylene by controlling feed of the monomers.

TABLE 5

Monomer: Isobutylene $[M]_o$ = 1.173 mole/ℓ

Initiator: DiCuOMe $[I]_o$ - as indicated mole/ℓ

Coinitiator: $BCl_3$ $[BCl_3]$ = 3.7 x $10^{-1}$ mole/ℓ

Time: 30 minutes or otherwise stated

Temperature: as indicated

Solvents: $CH_3Cl$ and $CH_2Cl_2$ (initial charge: 20 ml)

Killing with MeOH (~5 ml, precooled)

| | RUN | | | |
|---|---|---|---|---|
| | 5a | 5b | 5c | 5d |
| $[I]_o$ | $2.36x10^{-2}$ | $7.47x10^{-3}$ | $2.36x10^{-2}$ | $7.47x10^{-2}$ |
| Solvent | $CH_2Cl_2$ | $CH_2Cl_2$ | $CH_3Cl$ | $CH_3Cl$ |
| Temp. °C | -30 | -30 | -30 | -30 |
| Conv. % | 100 | 100* | 100 | 100* |
| $\bar{M}_n$ | 3600 | 9400 | 3050 | 10100 |
| $\bar{M}_w$ | 9300 | 20550 | 8300 | 19000 |
| $\bar{M}_w/\bar{M}_n$ | 2.6 | 2.1 | 2.7 | 1.8 |
| $I_{eff}$% | 84 | 96 | 98 | 90 |

| | RUN | |
|---|---|---|
| | 5e | 5f |
| $[I]_o$ | $2.36x10^{-2}$ | $7.47x10^{-2}$ |
| Solvent | $CH_2Cl_2$ | $CH_2Cl$ |
| Temp. °C | -10 | -10 |
| Conv.% | 100 | 100 |
| $\bar{M}_n$ | 3400 | 8300 |
| $\bar{M}_w$ | 10200 | 18500 |
| $\bar{M}_w/\bar{M}_n$ | 3.0 | 2.2 |
| $I_{eff}$% | 88 | 108 |

*Conversions were ~100% after 1 minute

Example 6

This series of experiments was similar to those summarized in Example 4. The purpose of this series was to demonstrate the absence of chain transfer to the monomer. The results are shown in Table 6. When the 1/ $\overline{DP}_n$ was plotted against 1/$[M]_o$, a straight line was obtained starting from the origin. The absence of the intercept indicates absence of chain transfer to monomer, i.e., living polymerizations.

TABLE 6

Monomer: Isobutylene $[M]_o$ = as stated mole/ℓ

Initiator: DiCuOMe $[I]_o$ = $5.92 \times 10^{-3}$ mole/ℓ

Coinitiator: $BCl_3$ $[BCl_3]$ = $3.1 \times 10^{-1}$ mole/ℓ

Solvent: $CH_2Cl_2$ (initial charge: 20 ml)

Temperature: minus 10°C

Time: 30 minutes

Killing with MeOH (~5 ml, precooled)

| | RUN | | | | |
|---|---|---|---|---|---|
| | 6a | 6b | 6c | 6d | 6e |
| $[M]_o$ | 0.282 | 0.564 | 0.846 | 1.128 | 1.58 |
| Conv. % | 100 | 100 | 100 | 100 | 100 |
| $\overline{M}_n$ | 2600 | 5400 | 8250 | 12000 | 13400 |
| $\overline{M}_w$ | 5700 | 10000 | 16700 | 22300 | 22900 |
| $\overline{M}_w/\overline{M}_n$ | 1.0 | 1.8 | 2.0 | 1.8 | 1.7 |
| $I_{eff}$% | ~100 | ~100 | ~100 | 91 | 93 |

Example 7

In these experiments, we have employed 2,2′-dimethoxy propane (DMP) as bifunctional initiator under the general experimental conditions used in Examples 1-4. Table 7 shows the reagent concentrations and summarizes the results.

TABLE 7

Monomer: Isobutylene $[M]_o$ = as indicated mole/ℓ

Initiator: DMP $[I]_o$ = as indicated mole/ℓ

Coinitiator: $BCl_3$ $[BCl_3]$ = as indicated mole/ℓ

Solvent: $CH_3Cl$ or $CH_2Cl_2$ (initial charge: 20 ml)

Temperature: minus 30°C

Time: 30 minutes

Killing with MeOH(~5 ml, precooled)

| | RUN 7a | 7b | 7c | 7d |
|---|---|---|---|---|
| Solvent | $CH_2Cl_2$ | $CH_2Cl_2$ | $CH_2Cl_2$ | $CH_3Cl$ |
| $[I]_o$ | $2.7x10^{-2}$ | $5.4x10^{-2}$ | $8.2x10^{-2}$ | $8.2x10^{-2}$ |
| $[BCl_3]$ | $13.6x10^{-2}$ | $27.2x10^{-2}$ | $40.4x10^{-2}$ | $40.4x10^{-2}$ |
| $[M]_o$ | 1.4 | 1.4 | 2.08 | 2.08 |
| Conv. % | 27 | 37 | 75 | 25 |
| $\overline{M}_n$ | 4000 | 2300 | 1500 | 800 |

Example 8

In this experimental series a trifunctional initiator 1,3,5-tris(2-methoxy propane)benzene (also called tricumyl methoxy, TCuOMe) has been used at minus 30° under the general conditions used in Examples 1-4. Due to the trifunctional nature of this initiator, a trifunctional telechelic polymer with the following structure has been obtained:

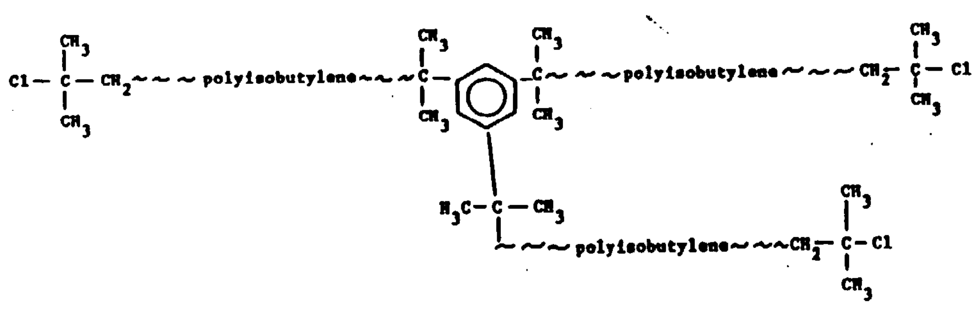

The structure of the end groups has been proven by proton NMR spectroscopy. The number of isobutylene units incorporated into the three-arm star polymer is determined by the $[M]_o/[I]_o$ ratio. Table 8 shows the experimental conditions and summarizes the results.

TABLE 8

| | |
|---|---|
| Monomer: | Isobutylene, 1.0 mole/ℓ |
| Initiator, $[I]_o$ | 1,3,5-tris(2-methoxy propane)benzene, TCuOMe |
| Coinitiator: | $BCl_3$, 5.16 x $10^{-1}$ mole/ℓ |
| Solvent: | $CH_3Cl$ or $CH_2Cl_2$, 23.5ml |
| Polymerization Time: | 30 minutes |
| Temperature: | minus 30°C |

Killing with MeOH (~ 5ml, precooled)

| | RUN | | | | | |
|---|---|---|---|---|---|---|
| | 8a | 8b | 8c | 8d | 8e | 8f |
| Solvent | $CH_3Cl$ | $CH_3Cl$ | $CH_3Cl$ | $CH_2Cl_2$ | $CH_2Cl_2$ | $CH_2Cl_2$ |
| $[I]_o$ mole/ℓ | $5.59x10^{-2}$ | $1.86x10^{-2}$ | $6.2x10^{-3}$ | $5.59x10^{-2}$ | $1.86x10^{-2}$ | $6.2x10^{-3}$ |
| Conv., % | 100 | 100 | 100 | 100 | 100 | 100 |
| $\overline{M}_n$ | 1300 | 4800 | 14700 | 1350 | 5500 | 13700 |
| $\overline{M}_w/\overline{M}_n$ | 1.7 | 1.5 | 1.3 | 2.1 | 1.7 | 1.5 |

Example 9

The following experiments concern investigations to illustrate the scope of the invention. In all these experiments the $BCl_3$, is added to various initiator-isobutylene charges in $CH_2Cl_2$ solvent at minus 10°C and the conversions are noted after 30 minutes of reaction time. Table 9 shows conditions and observations.

TABLE 9

Monomer: Isobutylene $[M]_o$ = 1.17 mole/ℓ

Initiator: Various ethers $[I]_o$ = $2.3x10^{-2}$ mole/ℓ

Coinitiator: $BCl_3$ $[BCl_3]$ = $3.7x10^{-1}$ mole/ℓ

Time: 30 minutes or otherwise as stated

Temperature: minus 10°C

Solvent: $CH_2Cl_2$ (initial charge: 20 ml)

Killing with MeOH (~5 ml, precooled)

| RUN | ETHER | OBSERVATION |
|---|---|---|
| 9a | 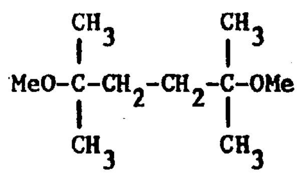 | Copious amount of polymer |
| 9b | 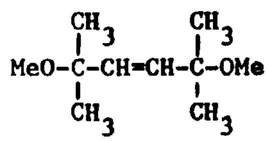 | Copious amount of polymer |
| 9c | 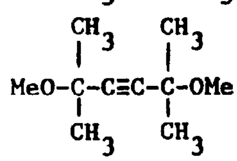 | Copious amount of polymer |
| 9d* | 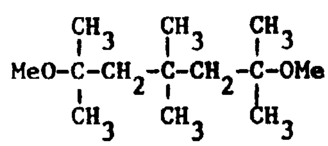 | Copious amount of polymer |
| 9e* | 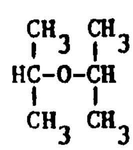 | Copious amount of polymer |
| 9f* | 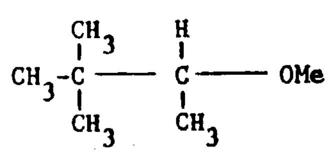 | Copious amount of polymer |

* outside the scope of the claims

TABLE 9 (continued)

| Run | Ether | Observation |
|---|---|---|
| 9g * | 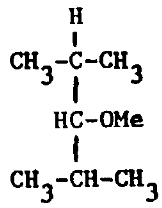 | Copious amount of Polymer |
| 9h | 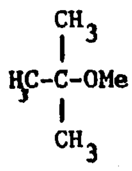 | Copious amount of Polymer |
| 9i * | 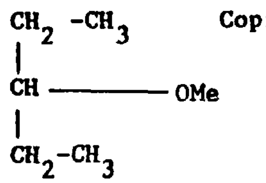 | Copious amount of Polymer |
| 9j * | 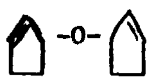 | Copious amount of Polymer |
| 9k | 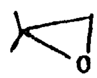 | Copious amount of Polymer |
| 9l | 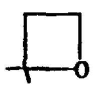 | Copious amount of Polymer |
| 9m * | 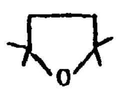 | Copious amount of Polymer |
| 9n * | 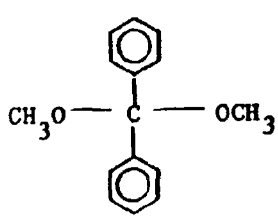 | Copious amount of Polymer |

* outside the scope of the claims

TABLE 9 (continued)

| Run | Ether | Observation |
|---|---|---|
| 9o | 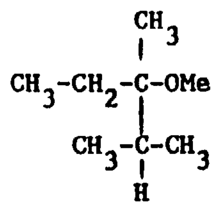 | Copious Amount of Polymer |
| 9p * | 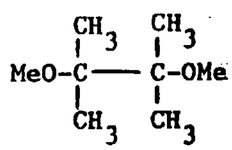 | Copious Amount of Polymer |
| 9q * | 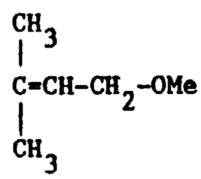 | Copious Amount of Polymer |
| 9r * | 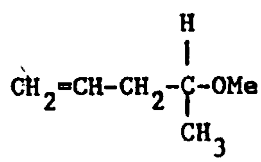 | Copious Amount of Polymer |
| 9s * | 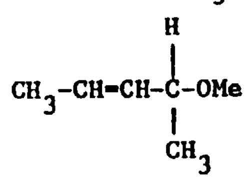 | Copious Amount of Polymer |

* outside the scope of the claims

TABLE 9 (continued)

| Run | Ether | Obsetvation |
|---|---|---|
| 9v* | 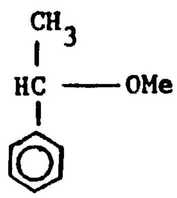 | Copious amount of Polymer |
| 9w* | 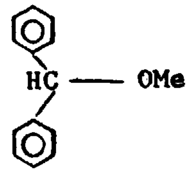 | Copious amount of Polymer |
| 9x* | 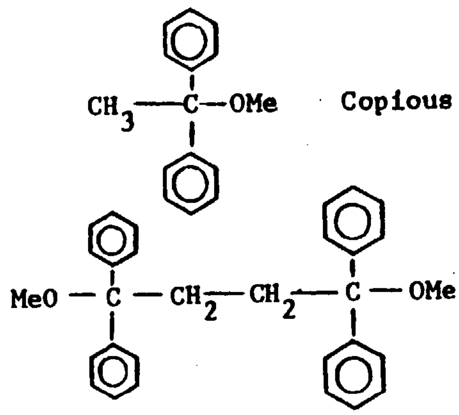 | Copious amount of Polymer |
| 9y* | | Copious amount of Polymer |
| 9z* | 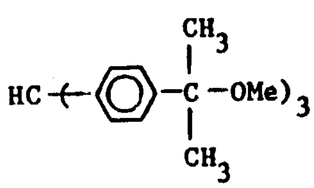 | Copious amount of Polymer |

* outside the scope of the claims

Example 10

Similarly to Example 9, scouting experiments are carried out with styrene as the olefinic monomer. In a series of tubes containing $CH_2Cl_2$ solvent, the initiator, and styrene, $BCl_3$ is added at minus 10°C and the yield is noted after 30 minutes of reaction time.

TABLE 10

Monomer: Styrene $[M]_o$ = 1.17 mole/ℓ

Initiator: Various ethers $[I]_o = 2.3 \times 10^{-2}$ mole/ℓ

Coinitiator: $BCl_3$ $[BCl_3] = 3.7 \times 10^{-1}$ mole/ℓ

Time: 30 minutes or otherwise stated

Temperature: minus 10°C

Solvent: $CH_2Cl_2$ (initial charge: 20 ml)

Killing with MeOH (~5 ml, precooled)

| RUN | ETHER | OBSERVATION |
|---|---|---|
| 10a | 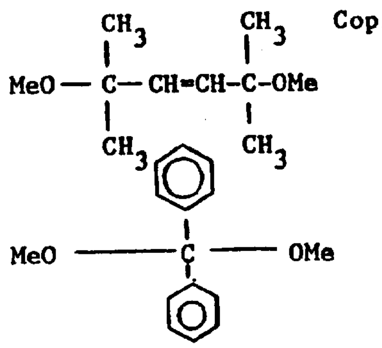 | Copious amount of Polymer |
| 10b* | | |
| 10c* | 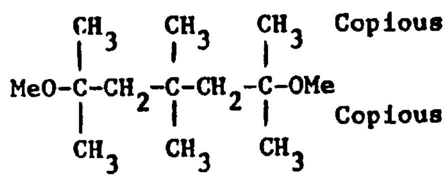 | Copious amount of Polymer<br>Copious amount of Polymer |
| 10d | 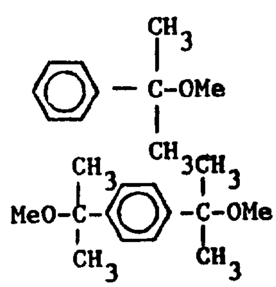 | Copious amount of Polymer |
| 10e | | Copious amount of Polymer |
| 10f | $(CH_3)_3C-CH_2-C(CH_3)_2OMe$ | Copious amount of Polymer |

* outside the scope of the claims

Example 11

To prove the living nature of IB or related olefins initiated by the supernonnucleophilic counter anion complex, a number of experiments were run and then linear plots of $\overline{M}_n$ versus grams of polymer formed in the reactor were constructed to see if the plots are linear and that they cross the origin on extrapolation.

These series of experiments were run in a series of test tubes which were charged with 20 ml $CH_2Cl_2$ 2,4,4-trimethyl-2-methoxy pentane hereinafter called TMPOMe (5.76 x $10^{-3}$ mole/l) and 0.5 ml IB, in that order, and thermoequilibrated at minus 30°C. Then the polymerization was started by introducing 0.25 ml $BCl_3$ (liquefied) into the test tubes. The $BCl_3$ concentration was 1.55 x $10^{-1}$ mol/l in the reactor. After 30 minutes of reaction time, the reaction in the first of the test tubes was killed by the addition of methanol, whereas an additional 0.5 ml IB was added to the rest of the tubes. After 30 minutes, the reaction in the second tube was killed whereas an additional 0.5 ml IB was added to the remaining tubes. This procedure was repeated until all the charges in the series of test tubes had been quenched. After conventional workup, the amount of polymer and its molecular weight and molecular weight distribution were determined. These data are given in Table 11. A plot of the $\overline{M}_n$s in Table 11 versus the grams of PIB formed gave a straight line passing through the origin which indicates a living system.

TABLE 11

| | | |
|---|---|---|
| Monomer: | Isobutylene | |
| Initiator: | TMPOMe | $[I]_o = 4.89 \times 10^{-3}$ mole/ℓ |
| Coinitiator: | $BCl_3$ | $[BCl_3] = 1.55 \times 10^{-1}$ mole/ℓ |
| Solvent: | $CH_2Cl_2$ | (initial charge: 20 ml) |
| Polymerization time: | 30 minutes between each addition | |
| Temperature: | minus 30°C | |
| Killing with MeOH (~ 5 ml, precooled) | | |

| Run | Isobutylene Added, ml | $\overline{M}_n$ | $\overline{M}_w$ | $\overline{M}_w/\overline{M}_n$ | Polymer formed, g |
|---|---|---|---|---|---|
| 11 a | 0.5 | 7000 | 11900 | 1.7 | 0.28 |
| 11 b | 0.5 + 0.5 | 13400 | 21400 | 1.6 | 0.56 |
| 11 c | 0.5 + 0.5 + 0.5 | 17050 | 27300 | 1.6 | 0.82 |
| 11 d | 0.5 + 0.5 + 0.5 + 0.5 | 19800 | 29700 | 1.5 | 1.11 |

Example 12

An essentially identical series of experiments described in Example 11 was carried out except in this series of runs the TMPOMe was premixed with $BCl_3$, and the system was aged for 30 minutes at minus 30°C before the first IB amount was added. Aging was effected because it was thought that initiation occurs by an ionic species formed from the ether plus $BCl_3$ and that ionization may need some time:

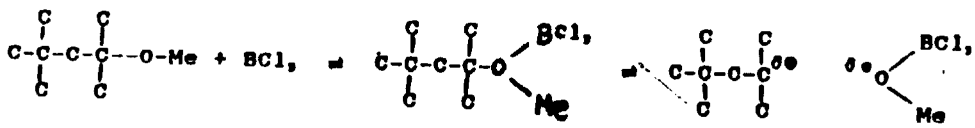

Table 12 shows the data. Indeed, we have obtained theoretical molecular weights, i.e., $\overline{M}_n$ = $[M]_o/[I]_o$, and the $\overline{M}_n$ versus g polymer formed plot was linear starting from the origin indicating a living polymerization system.

TABLE 12

Monomer: Isobutylene

Initiator: TMPOMe $[I]_o = 4.89 \times 10^{-3}$ mole/ℓ

Coinitiator: $BCl_3$ $[BCl_3] = 1.55 \times 10^{-1}$ mole/ℓ

Solvent: $CH_2Cl_2$ (initial charge: 20 ml)

Polymerization Time: 30 minutes between each addition

Temperature : minus 30°C

Killing with MeOH (~5 ml, precooled)

| Run | Isobutylene added, ml | $\overline{M}_n$ | $\overline{M}_w$ | $\overline{M}_w/\overline{M}_n$ | Polymer formed, g |
|---|---|---|---|---|---|
| 12a | 0.5 | 4700 | 17400 | 3.7 | 0.35 |
| 12b | 0.5 + 0.5 | 9600 | 19200 | 2.0 | 0.69 |
| 12c | 0.5 + 0.5 + 0.5 | 11500 | 19500 | 1.7 | 0.95 |
| 12d | 0.5 + 0.5 + 0.5 + 0.5 | 14500 | 24500 | 1.7 | 1.31 |
| 12e | 0.5 + 0.5 + 0.5 + 0.5 + 0.5 | 15400 | 26000 | 1.7 | 1.52 |

Example 13

An identical series of experiments described in Example 11 has been carried out with the 2-phenyl-2-methoxy propane (CuOMe) initiator with $BCl_3$ cointiator in $CH_3Cl$ at minus 30°C. The data are shown in Table 13. The $\overline{M}_n$ versus g polymer formed plot gave a straight line passing through the origin indicating a living system. The molecular weights were theoretical, i.e., $\overline{M}_n = [M]_o/[I]_o$ indicating a living system.

TABLE 13

| | |
|---|---|
| Monomer: | Isobutylene |
| Initiator: | CuOMe $[I]_o = 5\cdot76 \times 10^{-3}$ mole/ℓ |
| Coinitiator: | $BCl_3$ $[BCl_3] = 1.55 \times 10^{-1}$ mole/ℓ |
| Solvent: | $CH_2Cl_2$ (initial charge: 20 ml) |
| Polymerization Time: | 30 minutes between each addition |
| Temperature : | minus 30°C |
| Killing with MeOH (∼5 ml, precooled) | |

| Run | Isobutylene added, ml | $\overline{M}_n$ | $\overline{M}_w$ | $\overline{M}_w/\overline{M}_n$ | Polymer formed, g |
|---|---|---|---|---|---|
| 13a | 0.5 | 4200 | 10100 | 2.4 | 0.32 |
| 13b | 0.5 + 0.5 | 7600 | 22800 | 3.0 | 0.60 |
| 13c | 0.5 + 0.5 + 0.5 | 9400 | 18800 | 2.0 | 0.89 |
| 13d | 0.5 + 0.5 + 0.5 + 0.5 | 13500 | 35100 | 2.6 | 1.27 |
| 13e | 0.5 + 0.5 + 0.5 + 0.5 + 0.5 | 14900 | 35800 | 2.4 | 1.55 |

Example 14

An identical series of experiments described in Example 13 has been carried out except in these runs $CH_3Cl$ was used as the solvent. Table 14 shows the data. The plot of the $\overline{M}_n$ data gave a straight line passing through the origin indicating a living system. The molecular weights were theoretical, i.e., $\overline{M}_n = [M]_o/[I]_o$ indicating a living system.

TABLE 14

| | | |
|---|---|---|
| Monomer: | Isobutylene | |
| Initiator: | CuOMe | $[I]_o$ = 5.76 x $10^{-3}$ mole/ℓ |
| Coinitiator: | $BCl_3$ | $[BCl_3]$ = 1.53 x $10^{-1}$ mole/ℓ |
| Solvent: | $CH_3Cl$ | (initial charge: 20 ml) |
| Polymerization Time: | 30 minutes between each addition | |
| Temperature : | minus 30°C | |
| Killing with MeOH (~5 ml, precooled) | | |

| Run | Isobutylene added, ml | $\overline{M}_n$ | $\overline{M}_w$ | $\overline{M}_w/\overline{M}_n$ | Polymer formed, g |
|---|---|---|---|---|---|
| 14a | 0.5 | 3900 | 7800 | 2.0 | 0.31 |
| 14b | 0.5 + 0.5 | 5400 | 12900 | 2.4 | 0.53 |
| 14c | 0.5 + 0.5 + 0.5 | 8700 | 20000 | 2.3 | 0.81 |
| 14d | 0.5 + 0.5 + 0.5 + 0.5 | 12200 | 23200 | 1.9 | 1.15 |
| 14e | 0.5 + 0.5 + 0.5 + 0.5 + 0.5 | 14200 | 28400 | 2.0 | 1.29 |

Example 15

In this series of experiments we have used the bifunctional initiator 1,4-bis(2-methoxy propane)benzene (DiCuOMe) in $CH_3Cl$ solvent to demonstrate living polymerization with a bifunctional ether and to produce an α, ω-difunctional tert.-chloro telechelic polyisobutylene. The general experimental conditions were identical to those in Experiments 11, 13 and 14. Table 15 shows the data. Close to theoretical molecular weights were obtained. A plot of $\overline{M}_n$ vergus g polymer formed gave a straight line starting at the origin. Evidently the system was a living one.

TABLE 15

| | | |
|---|---|---|
| Monomer: | Isobutylene | |
| Initiator: | DiCuOMe | $[I]_o = 5.92 \times 10^{-3}$ mole/ℓ |
| Coinitiator: | $BCl_3$ | $[BCl_3] = 3.1 \times 10^{-1}$ mole/ℓ |
| Solvent: | $CH_3Cl$ | (initial charge: 20 ml) |
| Polymerization Time: | 30 minutes between each addition | |
| Temperature : | minus 30°C | |
| Killing with MeOH (~5 ml, precooled) | | |

| Run | Isobutylene added, ml | $\overline{M}_n$ | $\overline{M}_w$ | $\overline{M}_w/\overline{M}_n$ | Polymer formed, g |
|---|---|---|---|---|---|
| 15a | 0.5 | 4000 | 8000 | 2.0 | 0.32 |
| 15b | 0.5 + 0.5 | 7200 | 13000 | 1.8 | 0.56 |
| 15c | 0.5 + 0.5 + 0.5 | 11400 | 17100 | 1.5 | 0.88 |
| 15d | 0.5 + 0.5 + 0.5 + 0.5 | 12600 | 18900 | 1.5 | 1.05 |
| 15e | 0.5 + 0.5 + 0.5 + 0.5 + 0.5 | 16200 | 22700 | 1.4 | 1.33 |

Example 16

This experimental series was identical to that described in Example 15, except we used $CH_2Cl_2$ solvent. An α, ω-bifunctional tert.-chloro telechelic polymer was obtained. The molecular weights were theoretical, determined by $\overline{M}_n = [M]_o/[I]_o$. The plot of $\overline{M}_n$ versus g polymer formed gave a straight line starting from the origin, indicating a living system. Table 16 shows the data.

## TABLE 16

Monomer: Isobutylene
Initiator: DiCuOMe $[I]_o = 5.92 \times 10^{-3}$ mole/ℓ
Coinitiator: $BCl_3$ $[BCl_3] = 3.1 \times 10^{-1}$ mole/ℓ
Solvent: $CH_2Cl_2$ (initial charge: 20 ml)
Polymerization Time: 30 minutes between each addition
Temperature : minus 30°C
Killing with MeOH (~5 ml, precooled)

| Run | Isobutylene added, ml | $\overline{M}_n$ | $\overline{M}_w$ | $\overline{M}_w/\overline{M}_n$ | Polymer formed, g |
|---|---|---|---|---|---|
| 16a | 0.5 | 3600 | 7200 | 2.0 | 0.35 |
| 16b | 0.5 + 0.5 | 7700 | 12300 | 1.6 | 0.68 |
| 16c | 0.5 + 0.5 + 0.5 | 9700 | 15500 | 1.6 | 1.00 |
| 16d | 0.5 + 0.5 + 0.5 + 0.5 | 12500 | 21200 | 1.7 | 1.34 |
| 16e | 0.5 + 0.5 + 0.5 + 0.5 + 0.5 | 13200 | 22400 | 1.7 | 1.63 |

Example 17

This series of experiments demonstrates that living polymerizations can be obtained at minus 10°C if the $BCl_3$ coinitiator is added to a series of charges containing the CuOMe initiator and an increasing amount of IB. Table 17 shows the data. A plot of $\overline{M}_n$ vergus g polymer formed gave a straight line starting at the origin. The molecular weights were determined by $\overline{M}_n = [M]_o/(I)_o$. According to these data living polymerizations can readily be obtained at minus 10°C.

## TABLE 17

| | |
|---|---|
| Monomer: | Isobutylene |
| Initiator: | CuOMe $[I]_o = 5.76 \times 10^{-3}$ mole/ℓ |
| Coinitiator: | $BCl_3$ $[BCl_3] = 1.55 \times 10^{-1}$ mole/ℓ |
| Solvent: | $CH_2Cl_2$ (initial charge: 20 ml) |
| Polymerization Time: | 30 minutes between each addition |
| Temperature : | minus 10°C |
| Killing with MeOH (~5 ml, precooled) | |

| Run | Isobutylene added, ml | $\overline{M}_n$ | $\overline{M}_w$ | $\overline{M}_w/\overline{M}_n$ | Polymer formed, g |
|---|---|---|---|---|---|
| 17a | 0.5 | 3100 | 7600 | 2.4 | 0.31 |
| 17b | 1.0 | 7100 | 17900 | 2.5 | 0.59 |
| 17c | 1.5 | 11900 | 24850 | 2.1 | 0.94 |
| 17d | 2.0 | 13300 | 28400 | 2.1 | 1.23 |
| 17e | 2.5 | 14900 | 32900 | 2.2 | 1.57 |

Example 18

This series of experiments was carried out with the bifunctional ether DiCuOMe initiator at minus 10°C. The purpose of this experiment and the general conditions were the same as those described in Experiment 17. Table 18 shows the data. A plot of $\overline{M}_n$ versus g polymer formed gave a straight line starting at the origin. The molecular weights were theoretical and determined by $\overline{M}_n = [M]_o/[I]_o$. These data indicate a living polymerization system.

## TABLE 18

Monomer: Isobutylene

Initiator: DiCuOMe $[I]_o = 5.92 \times 10^{-3}$ mole/ℓ

Coinitiator: $BCl_3$ $[BCl_3] = 3.1 \times 10^{-1}$ mole/ℓ

Solvent: $CH_2Cl_2$ (initial charge: 20 ml)

Polymerization Time: 30 minutes between each addition

Temperature : minus 10°C

Killing with MeOH (~5 ml, precooled)

| Run | Isobutylene added, ml | $\overline{M}_n$ | $\overline{M}_w$ | $\overline{M}_w/\overline{M}_n$ | Polymer formed, g |
|---|---|---|---|---|---|
| 18a | 0.5 | 2600 | 5400 | 2.0 | 0.28 |
| 18b | 1.0 | 5400 | 10000 | 1.8 | 0.58 |
| 18c | 1.5 | 8250 | 16900 | 2.0 | 0.88 |
| 18d | 2.0 | 12000 | 22300 | 1.8 | 1.24 |
| 18e | 2.5 | 13400 | 22800 | 1.7 | 1.46 |

Example 19

This series of experiments was carried out with the trifunctional ether TCuOMe initiator at minus 30°C. The purpose of this experiment was to demonstrate that living polymerization can be obtained by a trifunctional initiating system. The general experimental conditions were the same as those described in Experiment 17. Table 19 shows the data. A plot of $\overline{M}_n$ versus g polyisobutylene formed gave a straight line starting at the origin. The molecular weights were close to theoretical and determined by $\overline{M}_n = [M]_o/[I]_o$. These data indicate a living polymerization system.

TABLE 19

| | |
|---|---|
| Monomer: | Isobutylene |
| Initiator: | TCuOMe $[I]_o = 4.3 \times 10^{-3}$ mole/l |
| Coinitiator: | $BCl_3$ $[BCl_3] = 1.98 \times 10^{-1}$ mole/l |
| Solvent: | $CH_3Cl$, initial charge 25 ml |
| Polymerization Time: | 30 minutes between addition |
| Temperature: | minus 30°C |

| Run | Isobutylene Added, ml | $\overline{M}_n$ | $\overline{M}_w/\overline{M}_n$ | Polymer formed, g |
|---|---|---|---|---|
| 19a | 0.5 | 3550 | 1.36 | 0.252 |
| 19b | 0.5 + 0.5 | 7400 | 1.4 | 0.443 |
| 19c | 0.5 + 0.5 + 0.5 | 10800 | 1.4 | 0.623 |
| 19d | 0.5 + 0.5 + 0.5 + 0.5 | 14650 | 1.36 | 0.773 |
| 19e | 0.5 + 0.5 + 0.5 + 0.5 + 0.5 | 16800 | 1.29 | 0.949 |

Example 20

Experiments have been carried out to study the end groups obtained in ether/Lewis acid induced isobutylene polymerizations. According to model experiments in which methyltert.butyl ether or 2,4,4-trimethyl-2-methoxy pentane is heated in the presence of $BCl_3$ the corresponding alkyl chloride is formed:

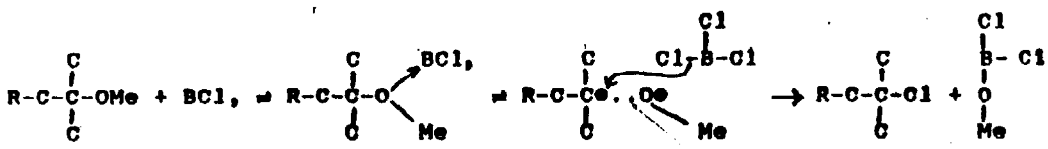

where R = H or $C(CH_3)_3$-. Similar results are obtained when methanol is added at minus 10°C. Thus under the polymerization conditions the tert.-chloro end group is obtained. It is immediately apparent that by the use of bifunctional ether/$BCl_3$ complex initiators, i.e., $CH_3$-O-$C(CH_3)_2$-O-$CH_3$, valuable diterminal telechelic polymers can be prepared.

A special embodiment of this invention relates to the random copolymerization of an alpha-olefin such as those exemplified by isobutylene, propylene, pentene or hexene, with a diolefin, preferably a conjugated one such as those exemplified by isoprene, butadiene and piperylene. Thus, copolymers containing either a major or minor amount of diolefin can be produced. Isobutylene plus an isoprene copolymer containing up to 5 percent isoprene in the chain are articles of commerce. The random polymers produced by this invention have commercial utility as butyl rubbers and especially those having a molecular weight of a hundred thousand and 1 to 4 percent unsaturation. These rubbers are sulfur-vulcanizable, heat stable, chemically resistant general purpose rubbers which may be used in inner tubes and inner liners of tires, tubes, curing bladders, mountings, vibration dampers, etc., and are convertible to the halogenated form of butyl rubber for other usages. Heretofore, butyl rubber was made commercially by a heterogeneous low temperature (minus 100°C) cationic suspension polymerization by the use of $AlCl_3$ catalyst in methyl chloride diluent. In order to obtain commercially useful molecular weights, the polymerization has to be carried out at cryogenic temperatures, viz., below minus 100°C. Therefore, a lot of work has been directed towards the raising of this very low temperature requirement. Also, controlling molecular weight with the $AlCl_3$ system is difficult, it requires changes in reactor temperature. Another problem with conventional polymerizations is reactor fauling. Fauling is the process during which polymer particles crosslink and agglomerate during the run and precipitate on the inner surfaces of the reactor. This adhering layer of crosslinked or gelled polymer decreases cooling efficiency so that molecular weight control becomes impossible. Thus, the reactor has to be shut off and the fauled polymer layer removed by a separate cumbersome and costly process. Great efforts have been extended to overcome fauling.

In Example 21, copolymerization of isobutylene with isoprene was demonstrated to occur readily with our complex catalyst.

Example 21

A series of copolymerization experiments have been carried out under the following conditions: A series of three test tubes have been charged at minus 30°C with 22.5 ml $CH_3Cl$, 2.0 ml isobutylene (0.94 mole/l) and 0.1 g cumyl methyl ether (0.66 x $10^{-3}$ mole) in that order. Then in a series of three test tubes, isoprene was introduced, i.e., 0.05 ml (or 2.13 mole percent on isobutylene); 0.1 ml (or 4.26 mole percent on isobutylene); and 0.2 ml (or 8.52 mole percent on isobutylene) isoprene. Finally, the copolymerizations were initiated by the introduction of 0.5 ml $BCl_3$ (2.8 $10^{-1}$ mole/l). The polymerizations proceeded with occasional mixings at minus 30°C for 30 minutes. Then the reactions were killed by adding 3 ml of prechilled methanol. Copious amounts of polymers have been obtained in all these experiments.

While in accordance with the patent statutes only the best mode and preferred embodiment of the invention has been illustrated and described in detail, it is to be understood that the invention is not limited thereto or thereby, but that the scope of the invention is defined by the appended claims.

## Claims

1. A method of producing a living polymer complex exhibiting supernonnucleophilic counter anions comprising the steps of:

   (a) reacting a Lewis acid selected selected from the group consisting of $BCl_3$, $AlCl_3$, $TiCl_4$, $SbF_5$, $FeCl_3$, $ZnCl_2$, and $VCl_4$ with an organic ether selected from the group consisting of

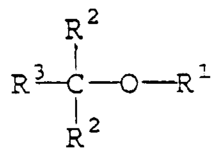

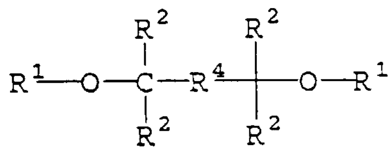

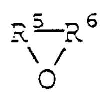

and

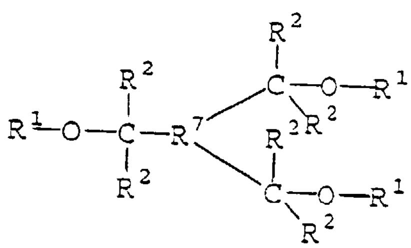

where

$R^1$ is an organic moiety such as methyl and related alkyl or aralkyl groups containing from 1 to 24 carbon atoms, alkenyl groups such as $-CH=CH_2$ and related lower alkenyl groups containing 2 to 8 carbon atoms, and groups containing hetero atoms containing up to 20 carbon atoms;

$R^2$ is methyl and related alkyl groups containing from 1 to 20 carbon atoms, and where $R^2$ can be the same as $R^1$, provided that where a single molecule comprises multiple $R^2$ groups, each $R^2$ group may be different to any other $R^2$ group present in the molecule;

$R^3$ is methyl, or related alkyls containing from 2 to 20 carbon atoms or aryl or cycloalkyl or vinyl or allyl groups and where $R^3$ can be the same as $R^2$;

$R^4$ is methylenic, ethylenic, acetylenic, or arylenic and where the repeating units contain from 1 to 20 carbon atoms;

$R^5$ is an alkylene selected from the group consisting of

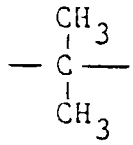

and $\{CH_2\}_x$ Where x is an integer from 1-6, and wherein the alkylene may be substituted;

$R^6$ is selected from the same group as $R^5$; and

$R^7$ is a three valent organic moiety such as

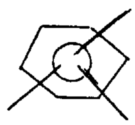

or

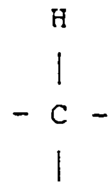

at a temperature below the decomposition temperature of the complex of the Lewis Acid and the organic ether to yield a carbocationic center; and

(b) reacting said carbocationic center with an olefin monomer to yield said living polymer complex wherein said supernonnucleophilic counter anions do not cause deprotonation of the growing carbocationic center and chain transfer to the monomer does not occur.

**2.** The method of claim 1, wherein the reaction of the Lewis acid and organic ether occurs in a chlorinated hydrocarbon.

**3.** The method of claim 1, wherein the temperature is -10°C or lower.

**4.** The method of claim 1, wherein the organic ether oxygen atom is adjacent to a tertiary carbon atom.

**5.** A living polymer complex exhibiting supernonnucleophilic counter anions, prepared by the method of any one of claims 1 to 4.

**6.** The complex of claim 5, wherein the olefinic monomer is an alpha-olefin and contains from 3 to 8 carbons atoms.

**7.** The complex of claim 5 or 6, wherein the complex comprises two organic ether oxygen atoms, each of which is adjacent to a tertiary carbon atom.

**8.** Compositions of matter having the structure selected from the class having the formulae of:

(a)

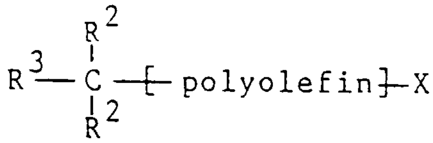

(b)

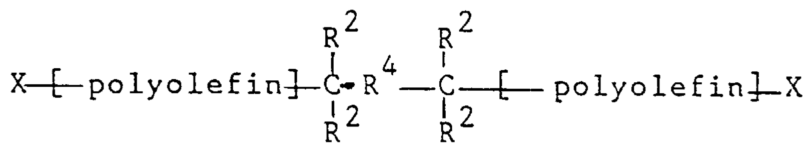

(c)

$CH_2=CH-CH_2-[polyolefin]-X$

(d)

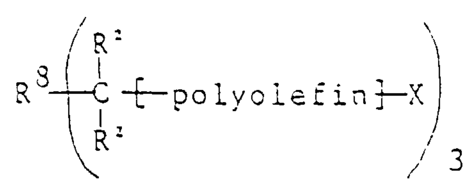

wherein the X end group is halogen or $OR^1$, and where

$R^1$ is hydrogen or methyl or an organic moiety;
$R^2$ is methyl and related alkyl groups containing from 1 to 20 carbon atoms and where $R^2$ can be the same as $R^1$, provided that where a single molecule comprises multiple $R^2$ groups, each $R^2$ group may be different to any other $R^2$ group present in the molecule;
$R^3$ is methyl, or related alkyls containing from 2 to 20 carbon atoms, or aryl, cycloalkyl, vinyl or allyl groups and where $R^3$ can be the same as $R^2$;
$R^4$ is methylene or polymethylene, ethylenic, acetylenic, phenyl or related homologous groups;
$R^8$ is a trivalent organic moiety; and wherein the tail group

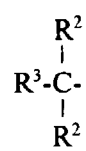

with relation to formula (a) is different to the monomeric repeating unit present in the polymer.

**9.** The composition of claim 8, wherein the olefin monomers are chosen from the class consisting of styrene, isobutylene, alpha-methylstyrene and mixtures thereof to yield a block polymer segment.

**Patentansprüche**

**1.** Verfahren zur Herstellung eines Lebendpolymerkomplexes, der super-nichtnucleophile Gegenanionen aufweist, umfassend die Schritte:

(a) Umsetzen einer Lewis-Säure, ausgewählt aus $BCl_3$, $AlCl_3$, $TiCl_4$, $SbF_5$, $FeCl_3$, $ZnCl_2$ und $VCl_4$, mit einem organischen Ether, ausgewählt aus

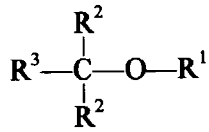

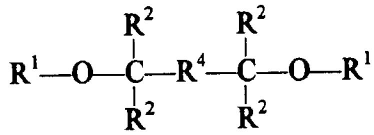

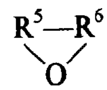

und

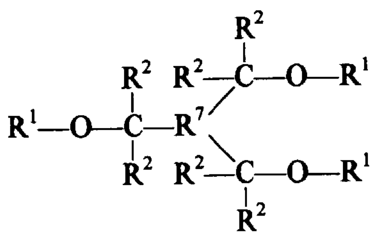

wobei

- $R^1$ eine organische Einheit, wie eine Methylgruppe und verwandte Alkyl- oder Aralkylreste mit 1 bis 24 Kohlenstoffatomen, Alkenylreste, wie $-CH=CH_2$ und verwandte Niederalkenylreste mit 2 bis 8 Kohlenstoffatomen, sowie Reste, die Heteroatome und bis zu 20 Kohlenstoffatome enthalten, darstellt,
- $R^2$ eine Methylgruppe und verwandte Alkylreste mit 1 bis 20 Kohlenstoffatomen ist, und wobei $R^2$ der gleiche Rest wie $R^1$ sein kann, mit der Maßgabe, daß in den Fällen, in denen ein einzelnes Molekül mehrere $R^2$-Reste umfaßt, jeder $R^2$-Rest von einem beliebigen anderen, im Molekül enthaltenen $R^2$-Rest verschieden sein kann,
- $R^3$ eine Methylgruppe oder verwandte Alkylreste mit 2 bis 20 Kohlenstoffatomen oder einen Aryl- oder Cycloalkyl- oder Vinyl- oder Allylrest bedeutet, wobei $R^3$ und $R^2$ gleich sein können,
- $R^4$ eine Methylen-, Ethylen-, Acetylengruppe oder ein Arylenrest ist, und wobei die Grundeinheiten 1 bis 20 Kohlenstoffatome enthalten,
- $R^5$ einen Alkenylrest darstellt, ausgewählt aus

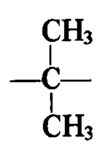

und

$-(CH_2)_x-$

wobei x für eine ganze Zahl mit einem Wert von 1 bis 6 steht, und wobei der Alkylenrest substituiert sein kann,

$R^6$ aus der gleichen Gruppe wie $R^5$ ausgewählt wird,

und

$R^7$ eine dreiwertige organische Einheit bedeutet, wie

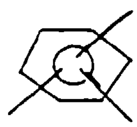

oder

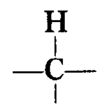

bei einer Temperatur unterhalb der Zersetzungstemperatur des Komplexes der Lewis-Säure mit dem organischen Ether, wobei ein carbokationisches Zentrum erhalten wird,

und

(b) Umsetzen des carbokationischen Zentrums mit einem Olefinmonomer, wodurch der Lebendpolymerkomplex erhalten wird, wobei die super-nichtnucleophilen Gegenanionen nicht zur Deprotonierung des wachsenden carbokationischen Zentrums führen und keine Kettenübertragung auf das Monomer erfolgt.

**2.** Verfahren nach Anspruch 1, wobei die Umsetzung der Lewis-Säure und des organischen Ethers in einem chlorierten Kohlenwasserstoff erfolgt.

**3.** Verfahren nach Anspruch 1, wobei die Temperatur -10°C oder weniger beträgt.

**4.** Verfahren nach Anspruch 1, wobei das Sauerstoffatom des organischen Ethers an ein tertiäres Kohlenstoffatom gebunden ist.

**5.** Lebendpolymerkomplex mit super-nichtnucleophilen Gegenanionen, der nach dem Verfahren nach einem der Ansprüche 1 bis 4 hergestellt wurde.

**6.** Komplex nach Anspruch 5, wobei das olefinische Monomer ein $\alpha$-Olefin ist und 3 bis 8 Kohlenstoffatome enthält.

**7.** Komplex nach Anspruch 5 oder 6, wobei der Komplex zwei organische Ethersauerstoffatome enthält, die jeweils an ein tertiäres Kohlenstoffatom gebunden sind.

**8.** Zusammensetzung mit der Struktur, ausgewählt aus der Klasse der Formeln

(a)

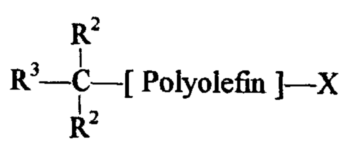

(b)

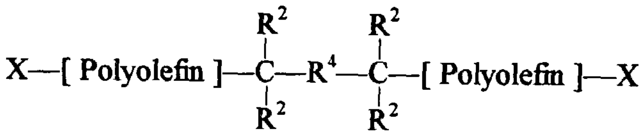

(c)

$CH_2=CH-CH_2$-[Polyolefin]-X

(d)

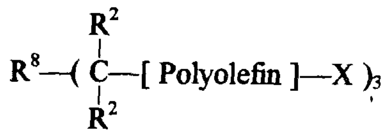

wobei die Endgruppe X ein Halogenatom oder $OR^1$ bedeutet,
und wobei

- $R^1$ ein Wasserstoffatom, eine Methylgruppe oder eine organische Einheit darstellt,
- $R^2$ eine Methylgruppe und verwandte Alkylreste mit 1 bis 20 Kohlenstoffatomen ist, und wobei $R^2$ und $R^1$ gleich sein können, mit der Maßgabe, daß in den Fällen, in denen ein einzelnes Molekül mehrere $R^2$-Reste umfaßt, jeder $R^2$-Rest von einem beliebigen anderen, im Molekül enthaltenen $R^2$-Rest verschieden sein kann,
- $R^3$ eine Methylgruppe oder verwandte Alkylreste mit 2 bis 20 Kohlenstoffatomen oder Aryl-, Cycloalkyl-, Vinyl- oder Allylreste bedeutet, wobei $R^3$ und $R^2$ gleich sein können,
- $R^4$ eine Methylen- oder Polymethylen-, Ethylen-, Acetylen-, Phenylgruppe oder verwandte homologe Reste darstellt,
- $R^8$ eine dreiwertige organische Einheit bedeutet,

und wobei
das Kettenende

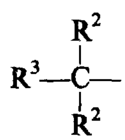

im Hinblick auf Formel (a) von der im Polymer vorhandenen monomeren Grundeinheit verschieden ist.

**9.** Zusammensetzung nach Anspruch 8, wobei die Olefinmonomeren aus der Klasse, bestehend aus Styrol, Isobutylen, α-Methylstyrol und deren Gemischen, ausgewählt sind, wodurch ein Blockpolymersegment erhalten wird.

**Revendications**

**1.** Procédé de production d'un complexe polymère vivant présentant des contre-anions supernonnucléophiles comprenant les étapes de:

(a) la mise en réaction d'un acide de Lewis choisi parmi le groupe constitué de $BCl_3$, $AlCl_3$, $TiCl_4$, $SbF_5$, $FeCl_3$, $ZnCl_2$ et $VCl_4$ avec un éther organique choisi parmi le groupe constitué de

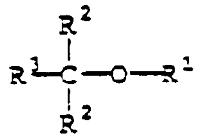

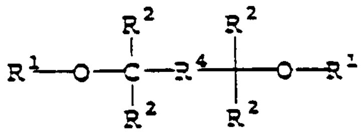

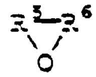

et

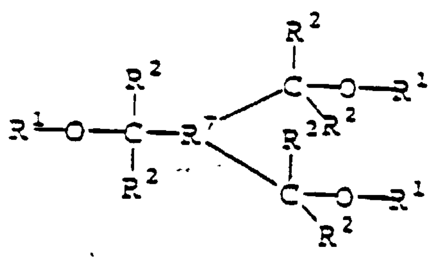

où

- $R^1$ est un motif organique tel que le groupe méthyle et des groupes alkyle et aralkyle apparentés contenant de 1 à 24 atomes de carbone, des groupes alcényle tels que $-CH=CH_2$ et des groupes alcényle apparentés inférieurs contenant 2 à 8 atomes de carbone, et des groupes contenant des hétéroatomes contenant jusqu'à 20 atomes de carbone;
- $R^2$ est le groupe méthyle et des groupes alkyle apparentés contenant de 1 à 20 atomes de carbone, et où $R^2$ peut être identique à $R^1$, sous réserve que lorsqu'une seule molécule comprend des groupes $R^2$ multiples, chaque groupe $R^2$ puisse être différent de tout autre groupe $R^2$ présent dans la molécule;
- $R^3$ est le groupe méthyle, ou des alkyles apparentés contenant de 2 à 20 atomes de carbone ou des groupes aryle ou cycloalkyle ou vinyle ou allyle et où $R^3$ peut être identique à $R^2$;
- $R^4$ est un groupe méthylénique, éthylénique, acétylénique ou arylénique et où les motifs récurrents contiennent de 1 à 20 atomes de carbone;
- $R^5$ est un alkylène choisi parmi le groupe constitué de

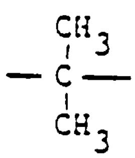 et 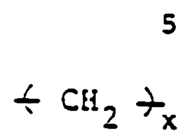

où x est un entier de 1 à 6, et où l'alkylène peut être substitué;

$R^6$ est choisi parmi le même groupe que $R^5$; et

$R^7$ est un motif organique trivalent tel que

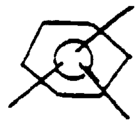

ou

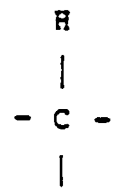

à une température inférieure à la température de décomposition du complexe de l'acide de Lewis et de l'éther organique pour donner un centre carbocationique; et

(b) la mise en réaction dudit centre carbocationique avec un monomère oléfinique pour donner ledit complexe polymère vivant où lesdits contre-anions supernonnucléophiles n'entraînent pas de déprotonation du centre carbocationique croissant et où il ne se produit pas de transfert de chaîne au monomère.

**2.** Procédé selon la revendication 1, dans lequel la réaction de l'acide de Lewis et de l'éther organique se produit dans un hydrocarbure chloré.

**3.** Procédé selon la revendication 1, dans lequel la température est de -10°C ou inférieure.

**4.** Procédé selon la revendication 1, dans lequel l'atome d'oxygène de l'éther organique est adjacent à un atome de carbone tertiaire.

**5.** Complexe polymère vivant présentant des contre-anions supernonnucléophiles, préparé par le procédé selon l'une quelconque des revendications 1 à 4.

**6.** Complexe selon la revendication 5, dans lequel le monomère oléfinique est une alpha-oléfine et contient de 3 à 8 atomes de carbone.

**7.** Complexe selon la revendication 5 ou 6, dans lequel le complexe comprend deux atomes d'oxygène d'éther organique, dont chacun est adjacent à un atome de carbone tertaire.

**8.** Compositions de matière dont la structure est choisie parmi la classe de formules:

(a)

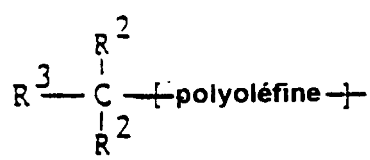

(b)

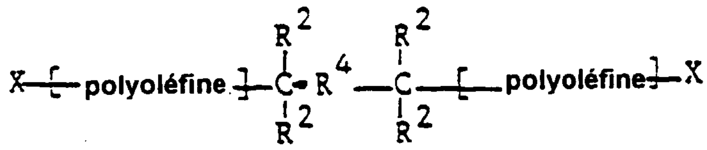

(c)

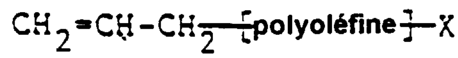

(d)

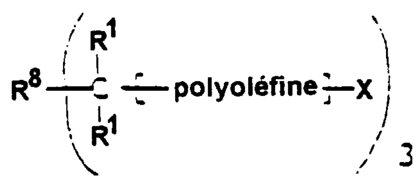

dans lesquelles le groupe terminal X est un halogène ou $OR^1$, et où

$R^1$ est l'hydrogène ou le groupe méthyle ou un motif organique;
$R^2$ est le groupe méthyle et des groupes alkyle apparentés contenant de 1 à 20 atomes de carbone et où $R^2$ peut être identique à $R^1$, sous réserve que lorsqu'une seule molécule comprend des groupes $R^2$ multiples, chaque groupe $R^2$ puisse être différent de tout autre groupe $R^2$ présent dans la molécule; $R^3$ est le groupe méthyle, ou des alkyles apparentés contenant de 2 à 20 atomes de carbone ou des groupes aryle ou cycloalkyle ou vinyle ou allyle et où $R^3$ peut être identique à $R^2$;
$R^4$ est le groupe méthylène ou polyméthylène, des groupes éthylénique, acétylénique ou phényle ou des groupes homologues apparentés;
$R^8$ est un motif organique trivalent; et dans lesquelles le groupe de fin

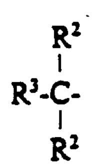

par rapport à la formule (a) est différent du motif récurrent monomère présent dans le polymère.

**9.** Composition selon la revendication 8, dans laquelle les monomères oléfiniques sont choisis parmi la classe constituée du styrène, de l'isobutylène, de l'alpha-méthylstyrène et des mélanges de ceux-ci pour donner un segment de polymère bloc.